# EUROPEAN PATENT APPLICATION

(11) **EP 2 950 028 A1**
(43) Date of publication of application: **02.12.2015**
(21) Application number: 14743236.3
(22) Date of filing: 22.01.2014
(51) Int. Cl.: F28D 20/00, E04B 1/76

(54) **THERMAL STORAGE CONTROL SYSTEM AND THERMAL STORAGE BODY USED IN SAME**

(30) Priority: 23.01.2013 JP 2013010315
(71) Applicant: Panasonic Intellectual Property Management Co., Ltd., Osaka-shi, Osaka 540-6207 (JP)
(72) Inventor: MURO, Naoki, Osaka-shi, Osaka 540-6207 (JP); YABUNOUCHI, Nobuaki, Osaka-shi, Osaka 540-6207 (JP); TAKAHASHI, Hayato, Osaka-shi, Osaka 540-6207 (JP)
(74) Representative: Appelt, Christian W.
(86) International application number: PCT/JP2014/000309
(87) International publication number: WO 2014/115545

(57) **Abstract**

The thermal storage control system includes a plurality of thermal storage bodies (a plurality of thermal storage blocks 11), a ventilation pathway 2, a plurality of opening-closing members (opening-closing valves 3, blower valves 13), and a control part 8. The plurality of thermal storage bodies are each provided with ventilation holes 12. The ventilation pathway 2 is formed to include the ventilation holes 12 and has a plurality of pathways from a first end to a second end so that air passes from the first end to the second end. The plurality of opening-closing members is configured to open or close the ventilation pathway 2. The control part 8 is configured to individually switch control the plurality of opening-closing members. The control part 8 is configured to switch a pathway through which an indoor air passes in the ventilation pathway 2 by individually controlling opening and closing of the plurality of opening-closing members based on temperature of each of the plurality of thermal storage bodies and temperature of the indoor air.

## Description

### TECHNICAL FIELD

The present invention relates to a thermal storage control system and a thermal storage body used in the same.

### BACKGROUND ART

There is a system of reducing an air conditioning load by storing heat in a thermal storage body positioned inside of a building, and recovering the heat stored in the thermal storage body using an indoor air as a heating medium during a time the air conditioning load being used. For example, warm or cool air is sent to a thermal storage body in an underfloor of a building, heat is stored in the thermal storage body through a heat exchange, the heat stored in the thermal storage body is recovered using an indoor air as a heating medium, and then the air in the underfloor is returned to an indoor space through an opening-closing valve (damper) provided on the floor (for example, see JP 05-98718 A).

Also, there are thermal storage bodies that are configured by arranging concrete blocks having ventilation holes (for example, see JP 2005-163443 A).

In a case where the thermal storage bodies are arranged, thermal storage conditions of a plurality of thermal storage bodies differs, from each other. Therefore, when the heat stored in the plurality of thermal storage bodies is recovered, heat can be effectively recovered from some of the plurality of thermal storage bodies while heat can be effectively recovered from some.

For example, an indoor space can be heated effectively by recovering a stored heat of a high temperature thermal storage body, using indoor air as a heating medium, while heating the indoor space in winter. However, it is difficult to heat the indoor space even if a stored heat of a low temperature thermal storage body is recovered because recoverable heat quantity is small.

### SUMMARY OF PRESENT INVENTION

The present invention has been made in view of the above-described problem, and an object of the present invention is to provide a thermal storage control system and a thermal storage body used in the same which can control temperature efficiently using a plurality of thermal storage bodies.

A thermal storage control system of the present invention includes: a plurality of thermal storage bodies, which each has a ventilation hole with openings on both ends, provided along a construction surface of an indoor space; a ventilation pathway formed to include the ventilation hole of each of the plurality of thermal storage bodies, and having a plurality of pathways from a first end to a second end so that air passes through from the first end to the second end; a plurality of opening-closing members provided in the ventilation pathway, and configured to open or close the ventilation pathway; thermal storage temperature detection parts configured to detect temperature of each of the plurality of thermal storage bodies; an indoor temperature detection part configured to detect temperature of indoor air in the indoor space; and a control part configured to determine a pathway through which the air passes in the ventilation pathway from the plurality of pathways by individually controlling opening and closing of the plurality of opening-closing members. The plurality of pathways of the ventilation pathway differs from each other in a combination of one or more thermal storage bodies which constitutes a pathways among the plurality of thermal storage bodies, and the control part is configured to switch the pathway through which the indoor air passes of the ventilation pathway among the plurality of pathways by individually controlling opening and closing of the plurality of opening-closing members based on the temperature of each of the plurality of thermal storage bodies and the temperature of the indoor air.

In the present invention, preferably, the thermal storage control system further includes an outdoor temperature detection part configured to detect temperature of outdoor air in an outdoor space. Preferably, the ventilation pathway absorbs the outdoor air through the first end, and the control part is configured to switch a pathway through which the outdoor air passes, among the plurality of pathways, of the ventilation pathway by individually controlling opening and closing of the plurality of opening-closing members based on the temperature of each of the plurality of thermal storage bodies, and the temperature of the outdoor air.

In the present invention, preferably, the thermal storage control system further includes a human detection part configured to detect an area where a person is in the indoor space. Preferably, the control part is configured to operate opening and closing of the plurality of opening-closing members so that a pathway including the ventilation hole of a first thermal storage body among the plurality of pathways and the ventilation hole of a second thermal storage body among the plurality of pathways is formed as a pathway through which the indoor air passes among the plurality of pathways, based on the temperature of each of the plurality of thermal storage bodies, the temperature of the indoor space, and detection result of the human detection part, the first thermal storage body facing to the area where the person is in the indoor space, the second thermal storage body exchanging heat with the first thermal storage body.

In the present invention, preferably, the control part is configured to determine a degree of deterioration of thermal storage performance of each of the plurality of thermal storage bodies based on a temporal change in the temperature of each of the plurality of thermal storage bodies.

In the present invention, preferably, the ventilation hole has a round shaped cross section having a normal direction that is a direction in which the air passes.

In the present invention, preferably, the control part is configured to switch the pathway so that the indoor air passes through at least one high thermal storage body having temperature higher than a target temperature of an air conditioner, which air-conditions the indoor space, among the plurality of thermal storage bodies when temperature of the indoor air temperature is lower than the target temperature of the air conditioner while the air conditioner heats the indoor space.

In the present invention, preferably, the control part is configured to switch the pathways, in a case where the at least one high thermal storage body includes a plurality of high thermal storage bodies when the air conditioner heats the indoor space, so that the indoor air passes through a high thermal storage body which has the highest temperature among the plurality of high thermal storage bodies.

In the present invention, preferably, the control part is configured to switch the pathway, so that the indoor air passes through at least one low thermal storage body having temperature lower than the target temperature of the air conditioner, which air-conditions the indoor space, among the plurality of thermal storage bodies when the temperature of the indoor air temperature is higher than the target temperature of the air conditioner while the air conditioner cools the indoor space.

In the present invention, preferably, the control part is configured to switch the pathways, in a case where the at least one low thermal storage body is included as a plurality of low thermal storage bodies when the air conditioner cools the indoor space, so that the indoor air pass through a low thermal storage body which has the lowest temperature among the plurality of low thermal storage bodies.

In the present invention preferably, a metal layer is formed on an inner surface of the ventilation hole.

A thermal storage body of the present invention is used as one of the plurality of thermal storage bodies of the thermal storage control system of the present invention. The thermal storage body includes a ventilation hole with openings on both ends, and a metal layer being formed on an inner surface of the ventilation hole.

As described above, in the present invention, as an effect of utilization of stored heat with selecting a pathway of the ventilation pathway including an efficient thermal storage body to control temperature of the indoor space based on a thermal condition of each of the plurality of thermal storage body, controlling the temperature of the indoor space efficiently using the plurality of thermal storage bodies is possible.

### BRIEF DESCRIPTION OF THE DRAWINGS

Preferred embodiments of the present invention will now be described in further details. Other features and advantages of the present invention will become better understood with regard to the following detailed description and accompanying drawings where;
FIG. 1 is a block diagram showing a configuration of a system of a first embodiment;
FIG. 2 is a block diagram showing a configuration of a ventilation pathway of the first embodiment;
FIGs. 3A and 3B are plane views showing a structure of ventilation holes 12;
FIG. 4 is a graphic diagram showing temporal changes in a temperature characteristic of a thermal storage body; and
FIG. 5 is a black diagram showing a configuration of a ventilation pathway of a second embodiment.

### DESCRIPTION OF EMBODIMENTS

The following describes an embodiment of the present invention with reference to drawings.

(First embodiment)

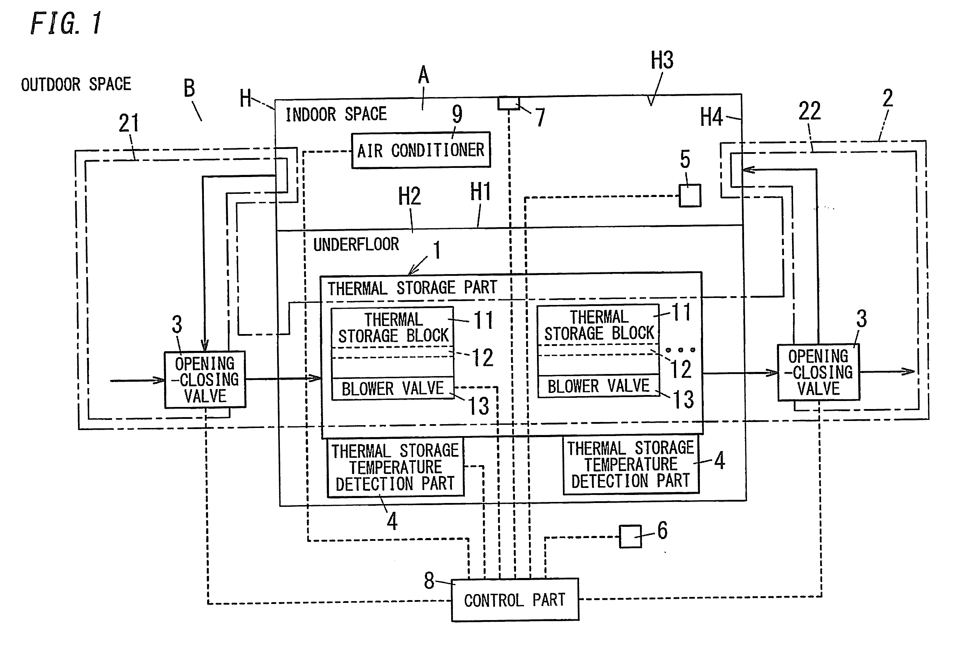

As shown in FIG. 1, a thermal storage control system of the present embodiment controls a thermal environment of an indoor space A in a building H, and includes a thermal storage part 1, a ventilation pathway 2, a plurality of opening-closing valves 3 (opening-closing members), a plurality of thermal storage body temperature detection parts 4, an indoor temperature detection part 5, an outdoor temperature detection part 6, a human detection part 7, and a control part 8.

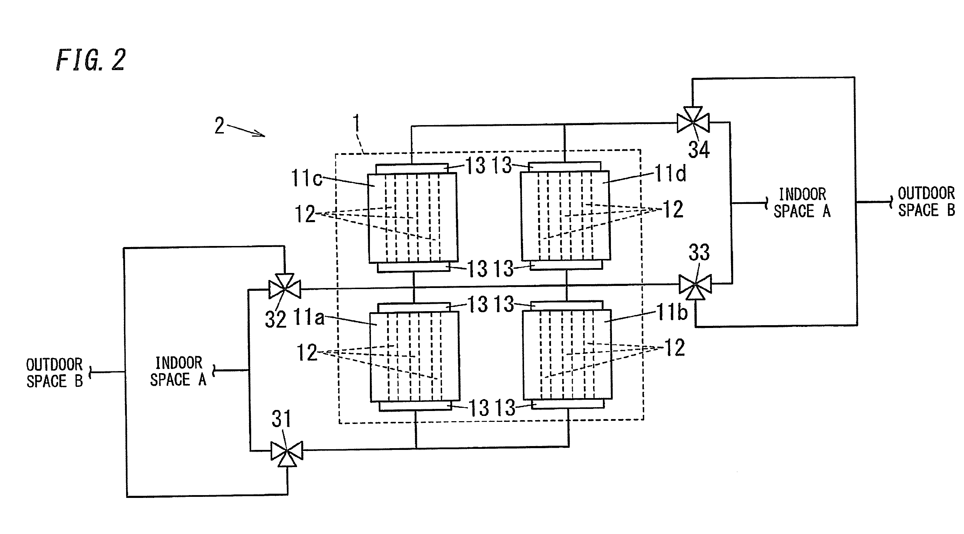

The thermal storage part 1 includes a plurality of thermal storage blocks 11 (thermal storage bodies), and the plurality of thermal storage blocks 11 are arranged along a flooring surface H1 (constituent face) in a space H2 under a floor in the building H. In the present embodiment, as shown in FIG. 2, four thermal storage blocks 11a to 11d as the plurality of thermal storage blocks 11 are arranged in two rows by two columns along the flooring surface H1. Note that, when the four thermal storage blocks 11 are distinguished, each thermal storage block 11 is identified as a thermal storage block 11a, 11b, 11c, or 11d (see FIG. 2).

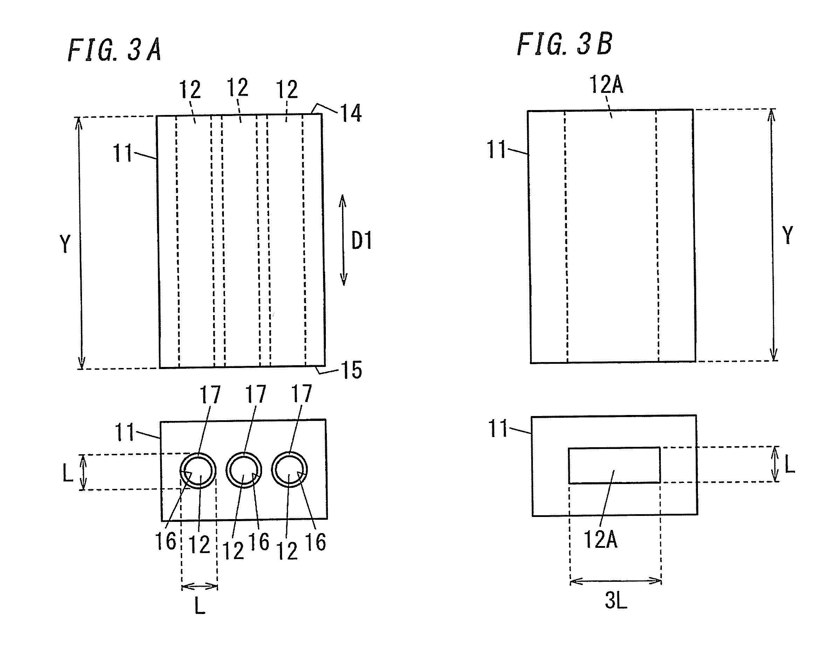

Each thermal storage block 11 is formed in a box shape made of a concrete, brick, paraffin, or the like, and in the present embodiment, is formed in a cuboid. The thermal storage block 11, as shown in FIG. 3A, has three ventilation holes 12 with openings on both ends. The three ventilation holes 12 are formed in parallel to each other. The thermal storage block 11 has the openings on sides 14 and 15 which are facing to each other. A cross section of each of the ventilation holes 12 is round shape having a diameter L. The cross section is a cross section in vertical direction to a direction in which an air in the ventilation holes 12 flows, that is, a cross section having as a normal direction, a direction D1 in which the air flows. Also, the thermal storage block 11 can store heat by exchanging heat with air passing in the ventilation holes 12 (a heating medium). Also, the thermal storage block 11 can adjust a thermal environment of the indoor space A utilizing a stored heat (a utilization of stored heat) by exchanging heat with air passing in the ventilation holes 12.

Here, it is considered to increase in convection heat transfer coefficient in an inner surface 16 of a ventilation hole 12 with which the air as the heating medium comes into contact in order to improve a heat exchanging capacity of the thermal storage block 11. Although it is possible to increase in the convection heat transfer coefficient by increasing a blowing capability of the air, there is a demerit of requiring great increase in a blowing capacity of a blowing device such as a fan or blower.

In the present embodiment, the heat exchanging capacity of the thermal storage blocks 11 is improved by expanding an area (a contacted area) the inner surface 16 of each of the ventilation holes 12 which the air as the heating medium comes into contact.

For example, as shown in FIG. 3B, in a case where a cross section of a ventilation hole 12A of a thermal storage block 11 is a rectangle shape that has a short side L when a long side L3, and a length of pathway of the ventilation hole 12A is Y, a contacted area is 8LY. On the other hand, as shown in FIG. 3A, in a case of the ventilation holes 12 of the thermal storage block 11, a total contacted area thereof is 3nLY. In other words, the thermal storage block 11 shown in FIG. 3A can have a 1.2 times larger contacted area by dividing into the ventilation holes 12 than a structure of having single ventilation hole 12A like the thermal storage block 11 shown in FIG. 3B, and can improve the heat exchanging capacity. In other words, the thermal storage block 11 shown in FIG. 3A can have a larger contacted area than that of in FIG. 3B despite the fact total of diameters of the ventilation holes 12 in a direction, in which the three ventilation holes 12 are arranged in line, is same length as the long side of the ventilation hole 12A. Also, with the cross section of each of the ventilation holes 12 being circle, heat is conducted more evenly to the thermal storage block 11.

Also, through the inner surface 16 of each of the ventilation holes 12 being covered by a metal layer 17 having relatively high thermal conductivity such as aluminum or copper, the heat exchanging capacity of the thermal storage block 11 can be further improved.

Further, the thermal storage block 11 is provided with blower valves 13 (opening-closing valves) on both ends (an inflow opening and an out flow opening) of the ventilation holes 12 (see FIG. 1 and FIG. 2), and the inflow opening and the out flow opening of the ventilation holes 12 are opened or closed by the blower valves 13 being switch controlled by the control part 8.

Furthermore, in the thermal storage control system of the present embodiment, the ventilation pathway 2 including the ventilation holes 12 is formed. That is, the ventilation pathway 2 is formed to include the ventilation holes 12 of each of the plurality of thermal storage blocks 11. Also, the ventilation pathway 2 includes a plurality of pathways from a first end 21 to a second end 22 so that air passes from the first end 21 to the second end 22. The first end 21 is an air inlet part of the ventilation pathway 2. The second end 22 is an air outlet part of the ventilation pathway 2. The ventilation pathway 2 absolves indoor air of the indoor space A or outdoor air of an outdoor space B, and supplies this absolved air to the indoor space A or the outdoor space B through at least one of the plurality of the thermal storage blocks 11 (the ventilation holes 12). Four opening-closing valves 3 (31 to 34) are provided on this ventilation pathway 2, and the control part 8 is configured to control switching actions of the opening-closing valves 31 to 34.

Further, by the control part 8 switch controlling each opening-closing valve 31 to 34 and each blower valve 13, the pathway through which the air passes in the ventilation pathway 2 is switched, then heat is stored to the thermal storage blocks 11, or the stored heat in the thermal storage block 11 is utilized.

Note that, each of the opening-closing valves 31 and 32 is a three-way valve including two inlets (a first inlet and a second inlet) and one outlet, and permits connection of the first inlet or the second inlet to the outlet by a switching action. Also, each of the opening-closing valves 33 and 34 is a three-way valve including one inlet and two outlets (a first outlet and a second outlet), and permits a connection of the inlet to the first outlet or the second outlet by a switching action. Further, the opening-closing valves 31 and 32 can perform a blocking action of permitting a connection of neither the first inlet nor the second inlet to the outlet. Also, the opening-closing valves 33 and 34 can perform a blocking action permitting a connection of neither the first outlet nor the second outlet to the inlet.

First, the first inlet of each of the opening-closing valves 31 and 32 communicates with the indoor space A, and the second inlet of each of the opening-closing valves 31 and 32 communicates with the outdoor space B.

Then, the outlet of the opening-closing valve 31 communicates with the inflow opening of each ventilation hole 12 of the thermal storage blocks 11a and 11b. Also, an outflow opening of each ventilation hole 12 of the thermal storage blocks 11a and 11b, and an inflow opening of each ventilation hole 12 of the thermal storage blocks 11c and 11d communicate with each other through pipes of the ventilation pathway 2. Further, the outlet of the opening-closing valve 32 communicates with the outflow opening of each ventilation hole 12 of the thermal storage blocks 11a and 11b, and the inflow opening of each ventilation hole 12 of the thermal storage blocks 11c and 11d. Furthermore, the inlet of the opening-closing valve 33 communicates with the outflow opening of each ventilation holes 12 of the thermal storage blocks 11a and 11b, and the inflow opening of each ventilation hole 12 of the thermal storage blocks 11c and 11d as well. Also, an inlet of the opening-closing valve 34 communicates with the outflow opening of each ventilation hole 12 of the thermal storage blocks 11c and 11d.

Further, the first outlet of each of the opening-closing valves 33 and 34 communicates with the indoor space A, and the second outlet of each of the opening-closing valves 33 and 34 communicates with the outdoor space B.

Furthermore, the ventilation pathway 2 is provided with a blowing device (not shown) such as a fun or blower on a upper stream side where the opening-closing valves 31 and 32 are provided in the ventilation pathway 2 so that the air is absolved from the indoor space A and the outdoor space B into the ventilation pathway 2. Instead of that, the ventilation pathway may be provided with a blowing device (not shown) such as a fun or blower on a lower stream side of where the opening-closing valves 33 and 34 are provided in the ventilation pathway 2 so that the air is discharged from the ventilation pathway 2 to the indoor space A and the outdoor space B.

In other words, in the ventilation pathway 2, the air flows from the upper stream side where the opening-closing valves 31 and 32 are provided (an end, the first end 21) to the lower stream side of where the opening-closing valves 33 and 34 are provided (the other end, the second end 22). Then, one pathway of the plurality of pathways from the upper stream side through the lower stream side of the ventilation pathway 2 is selectively formed by each of the switching actions of the opening-closing valves 31 to 34, and each of the blower valves 13 of the thermal storage blocks 11a to 11d. The plurality of pathways of the ventilation pathway 2 differs from each other in a combination of the plurality of thermal storage blocks 11 (the ventilation holes 12 thereof) which constitutes the pathway. The plurality of pathways differs from each other in a combination of the plurality of thermal storage blocks 11.

For example, it is assumed that each indoor space A side of the opening-closing valves 32 and 34 is open, the opening-closing valves 31 and 33 are cut down, the blower valves 13 of the thermal storage block 11c are open, and each blower valve 13 of the thermal storage blocks 11a, 11b, and 11d is closed. In this case, a pathway is formed in the ventilation pathway 2 so that the indoor air passes through the indoor space A, the opening-closing valve 32, the thermal storage block 11c, the opening-closing valve 34, and the indoor space A in an order thereof. In the ventilation pathway 2, the indoor air is absolved from the indoor space A, and then, only flow into the thermal storage block 11c in the thermal storage body 1.

Also, it is assumed that each outdoor space B side of the opening-closing valves 31 and 33 is open, the opening-closing valves 32 and 34 are cut down, the blower valves 13 of the thermal storage block 11b are open, and the blower valves 13 of each of the thermal storage blocks 11a, 11c, and 11d are closed. In this case, a pathway is formed in the ventilation pathway 2 so that the indoor air passes through the outdoor space B, the opening-closing valve 31, the thermal storage block 11b, the opening-closing valve 33, and the outdoor space B in an order thereof. In the ventilation pathway 2 the outdoor air is absolved from the outdoor space B, and then, only flow into the thermal storage block 11b in the thermal storage body 1.

As above mentioned, it is possible to form, in the ventilation pathway 2, the pathway the air passing from the indoor space A or the outdoor space B to the indoor space A or the outdoor space B through only the thermal storage blocks 11 that are chosen, by the control part 8 individually controlling the switch actions of the opening-closing valves 31 to 34 and each blower valve 13 of the thermal storage blocks 11a to 11d.

Further, thermal storage body temperature detection parts 4 are respectively provided in the thermal storage blocks 11a to 11d, and configured to measure temperature of the respective thermal storage blocks 11a to 11d (thermal storage temperature), and send a measurement result of this thermal storage temperature to the control part 8.

The indoor temperature detection part 5 is provided in the indoor space A, and configured to measure temperature of the indoor space A (indoor temperature), and send a measurement result of this indoor temperature to the control part 8.

The outdoor temperature detection part 6 is provided at the outdoor space B, and configured to measure temperature of the outdoor space B (outdoor temperature), and send a measurement result of this outdoor temperature to the control part 8.

The human detection part 7 is positioned on a ceiling, an inner wall, or the like of the indoor space A, has a function of detecting an area where a person is in the indoor apace A, and configured to send this detection result (existing area information) to the control part 8.

Also, the control part 8 is configured to obtain information of indoor target temperature (indoor target temperature information) set on an air conditioner 9 which air conditioning and controlling the indoor space A, in addition to the each temperature of the thermal storage blocks 11a to 11d, the indoor temperature, the outdoor temperature, and the existing area information. Further, the control part 8 is configured to obtain information of an operation (heating operation, cooling operation) of the air conditioner 9 (operational information).

Furthermore, the control part 8 is configured to individually control the switch actions of the opening-closing valves 31 to 34 and the blower valves 13 of the thermal storage blocks 11a to 11d based on the each temperature of the thermal storage blocks 11a to 11d, the indoor temperature, the outdoor temperature, the existing area information, and the indoor target temperature information. Then, the pathway through which the air (the indoor air, the outdoor air) actually passes in the ventilation pathway 2 is switched by each switch action of the opening-closing valves 31 to 34 and each of the blower valves 13 of the thermal storage blocks 11a to 11d, and the heat is stored to the thermal storage block 11 that is chosen, or utilization of stored heat using the thermal storage block 11 that is chosen is conducted. In other words, the control part 8 is configured to switches a supply pathway to supply the air to the indoor space A in the ventilation pathway 2 among the plurality of pathways.

First, the heat storage to the thermal storage blocks 11 is described. Note that, a concept of the heat storage in the present invention includes a cool storage of controlling the thermal storage body temperature in relatively low and utilizing for cooling in addition to a form of controlling the thermal storage body temperature in relatively high and utilizing for heating.

The control part 8 is configured to permit a heat storage process when temperature of at least one of the thermal storage blocks 11a to 11d is lower than the outdoor temperature during a daytime in winter or the like. Then, the control part 8 is configured to target the at least one thermal storage block 11, in which a thermal storage temperature is lower than the outdoor temperature, to compare the thermal storage temperature with a predetermined target temperature during heat storage (a target heat storage temperature). The target heat storage temperature may be set to any value manually by an user, or may be set automatically by learning function based on history of temperature set in past, or may be set to the outdoor temperature when the heat storage process is started.

Then, the control part 8 is configured to operate so that heat is first stored to a thermal storage block 11 having the highest temperature among the at least one of the thermal storage block 11 having current thermal storage body temperature lower than the target heat storage temperature.

For example, it is assumed that temperature of the thermal storage blocks 11a to 11d is lower than the target heat storage temperature, and the temperature of the thermal storage block 11a is the highest. In this case, the control part 8 is configured to open each of the outdoor space B sides of the opening-closing valves 31 and 33, cut down the opening-closing valves 32 and 34, open the blower valves 13 of the thermal storage block 11a, and close the blower valves 13 of each of the thermal storage blocks 11b to 11d. In this case, a pathway is formed in the ventilation pathway 2 so that the outdoor air passes through the outdoor space B, the opening-closing valve 31, the thermal storage block 11a, the opening-closing valve 33, and the outdoor space B in an order thereof. In the ventilation pathway 2, the outdoor air is absolved from the outdoor space B, the outdoor air passes through in above-mentioned pathway and then heat is stored in the thermal storage block 11a.

When the temperature of the thermal storage block 11a has rose to the target heat storage temperature, the control part 8 is configured to operate so that the thermal storage block 11c which has the highest temperature among the thermal storage blocks 11b to 11d stores heat. The control part 8 is configured to open the sides of the outdoor space B of the opening-closing valves 32 and 34, cut down the opening-closing valves 31 and 33, open the blower valves 13 of the thermal storage block 11c, and close the blower valves 13 of the thermal storage blocks 11a, 11b and 11d. In this case, a pathway is formed in the ventilation pathway 2 so that the outdoor air passes through the outdoor space B, the opening-closing valve 32, the thermal storage block 11c, the opening-closing valve 34, and the outdoor space B in an order thereof. In the ventilation pathway 2, the outdoor air is absolved from the outdoor space B, the outdoor air passes through in the above mentioned pathway, and then heat is stored in the thermal storage block 11c.

When the temperature of the thermal storage block 11c has rose to the target heat storage temperature, hereinafter, the control part 8 is configured to operate so that heat is stored to in an order, the thermal storage block 11 which has the highest temperature among thermal storage blocks 11 in which the current temperature is lower than the target heat storage temperature.

Further, in a case where the indoor temperature is low during a nighttime in winter or the like, a load of the air conditioner 9 heating the indoor space A can be reduced by utilizing the thermal storage blocks 11 which stores heat as mentioned above.

It is assumed that the air conditioner 9 heating the indoor space A and the target indoor temperature set on the air conditioner 9 is 20°C. If the indoor temperature is lower than 20°C, the control part 8 is configured to select any one of the thermal storage blocks 11 having temperature higher than 20°C (for example, the thermal storage block 11 with the highest temperature), and utilize stored heat of this selected thermal storage block 11.

For example, in a case where stored heat of the thermal storage block 11a is utilized, the control part 8 is configured to open the sides of the indoor space A of the opening-closing valves 31 and 33, cut down the opening-closing valves 32 and 34, open the blower valves 13 of the thermal storage block 11a, and close each of the blower valves 13 of the thermal storage blocks 11b to 11d. In this case, a pathway is formed in the ventilation pathway 2 so that the indoor air passes through the indoor space A, the opening-closing valve 31, the thermal storage block 11a, the opening-closing valve 33, and the indoor space A in an order thereof. In the ventilation pathway 2, the indoor air is absolved from the indoor space A then, the indoor air of the indoor space A is passes through the ventilation holes 12 of the thermal storage block 11a, and this indoor air is returned to the indoor space A. The indoor temperature of the indoor space A increases by the indoor air passing through the ventilation pathway 2 recovering stored heat of the thermal storage block 11a. Therefore, the load of the air conditioner 9 heating the indoor space A can be reduced.

If the indoor temperature is still lower than 20°C at the point where the temperature of the thermal storage block 11a has dropped to lower than 20°C, the control part 8 is configured to sequentially selects any one of other thermal storage blocks 11 in which thermal storage body temperature is equal to or higher than 20°C and utilizes stored heat of this selected thermal storage block 11 similarly.

Also, the control part 8 is configured to permit a cold storage process when a temperature of at least one of thermal storage blocks 11a to 11d is higher than the outdoor temperature during a nighttime in summer or the like. Then, the control part 8 targets the at least one thermal storage block 11, in which the thermal storage temperature is higher than the outdoor temperature, to compare the each of the thermal storage temperature with a predetermined target temperature during cold storage (a target cold storage temperature). Note that, the target cold storage temperature may be set to any value manually by the user, or may be set automatically by learning function based on history of temperature set in past, or may be set to the outdoor temperature when the cold storage process is started.

Then, the control part 8 is configured to operate so that cold is first stored to the thermal storage block 11 having the lowest temperature among at least one thermal storage block 11 having current thermal storage body temperature higher than the target heat storage temperature.

For example, when the temperature of each of the thermal storage blocks 11a to 11d is higher than the target cold storage temperature, and a temperature of the thermal storage block 11a is the lowest, the control part 8 is configured to open the sides of the outdoor space B of the opening-closing valves 31 and 33, cut down the opening-closing valves 32 and 34, open the blower valves 13 of the thermal storage block 11a, and open the blower valves 13 of the thermal storage blocks 11b to 11d. In this case, a pathway is formed in the ventilation pathway 2 so that the outdoor air passes through the outdoor space B, the opening-closing valve 31, the thermal storage block 11a, the opening-closing valve 33, and the outdoor space B in an order thereof. In the ventilation pathway 2, the outdoor air is absolved from the outdoor space B, the outdoor air passes through the above-mentioned pathway and cold is stored in the thermal storage block 11a.

When the temperature of the thermal storage block 11a has dropped to the target cold storage temperature, the control part 8 is configured to operate so that cold is stored to the thermal storage block 11c which has the lowest temperature among the thermal storage blocks 11b to 11d. The control part 8 is configured to open the sides of the outdoor space B of the opening-closing valves 32 and 34, cut down the opening-closing valves 31 and 33, open the blower valves 13 of the thermal storage block 11c, and close the blower valves 13 of the thermal storage blocks 11a, 11b and 11d. In this case, a pathway is formed in the ventilation pathway 2 so that the outdoor air passes through the outdoor space B, the opening-closing valve 32, the thermal storage block 11c, the opening-closing valve 34, and the outdoor space B in an order thereof. In the ventilation pathway 2, the outdoor air is absolved from the outdoor space B, the outdoor air passes through the above-mentioned pathway, and cold is stored in the thermal storage block 11c.

When the temperature of the thermal storage block 11c has dropped to the target cold storage temperature, hereinafter, the control part 8 is configured to operate so that cold is stored in order of the thermal storage block 11 which has the lowest temperature among the thermal storage blocks 11 in which current temperature is higher than the target cold storage temperature.

Further, in a case where the indoor temperature is high during a daytime in summer or the like, a load of the air conditioner 9 cooling the indoor space A can be reduced by utilizing the thermal storage blocks 11 which stores cold as mentioned above.

It is assumed that, during a daytime in winter the air conditioner 9 cools the indoor space A, and the target indoor temperature set to the air conditioner 9 is 28°C. If the indoor temperature is higher than 28°C, the control part 8 is configured to select any one of the thermal storage blocks 11 having temperature equal to or lower than 28°C (for example, the thermal storage block 11 with the lowest temperature), and utilize stored cold of this selected thermal storage block 11.

For example, in a case where stored cold of the thermal storage block 11a is utilized, the control part 8 is configured to open the sides of the indoor space A of the opening-closing valves 31 and 33, cut down the opening-closing valve 32 and 34, open the blower valves 13 of the thermal storage block 11a, and close the blower valves 13 of the thermal storage blocks 11b to 11d. In this case, a pathway is formed in the ventilation pathway 2 so that the indoor air passes through the indoor space A, the opening-closing valve 31, the thermal storage block 11a, the opening-closing valve 33, and the indoor space A in an order thereof. In the ventilation pathway 2, the indoor air is absolved from the indoor space A, the indoor air of the indoor space A is passes through the ventilation holes 12 of the thermal storage block 11a, and then, this indoor air is returned to the indoor space A. The indoor temperature of the indoor space A drops by the indoor air passing through the ventilation pathway 2 recovering stored cold of the thermal storage block 11a. Therefore, the load of the air conditioner 9 cooling the indoor space A can be reduced.

If the indoor temperature is still higher than 28°C at the point when the temperature of the thermal storage block 11a has rose to higher than 28°C, the control part 8 is configured to sequentially selects any one of other thermal storage blocks 11 in which thermal storage body temperature is equal to or lower than 28°C and utilizes stored cold of this selected thermal storage block 11 similarly.

As above mentioned, heat can be stored effectively using the plurality of the thermal storage blocks 11 through the control part 8 appropriately selecting the pathway of the ventilation pathway 2 in which stores heat (including cold) to the thermal storage block 11 based on the outdoor temperature and the thermal storage body temperature.

Also, the indoor space A can be thermal controlled effectively using the plurality of thermal storage blocks 11 through the control part 8 appropriately selecting the pathway of the ventilation pathway 2 including the thermal storage block 11 in which stored heat (including cold) is utilized, based on the indoor temperature and the thermal storage body temperature.

Next, a control operation of the control part 8 using the existing area information generated by the human detection part 7 is described.

First, it is assumed that, in FIG. 2, the temperature of the thermal storage block 11a is high enough with reference to the indoor temperature. However, even if utilizing, as a radiant heat through the floor, heat stored in the thermal storage block 11a to the person in the indoor space A unless person is on an area of a floor which the thermal storage block 11a is facing to above, thermal effect shrinks.

In view of this, the control part 8 is configured to determine which one of the thermal storage block 11 which the person is above based on the existing area information received from the human detection part 7. For example, in the case where the control part 8 determined that the person is above the thermal storage block 11c, the control part 8 is configured operate so that heat stored in the thermal storage block 11a (a second thermal storage body) moves to the thermal storage block 11c (a first thermal storage body).

Specifically, the control part 8 is configured to open the sides of the indoor space A of the opening-closing valves 31 and 34, cut down the opening-closing valves 32 and 33, and close the blower valves 13 of the thermal storage blocks 11b and 11c. In this case, a pathway is formed in the ventilation pathway 2 so that the indoor air passes through the indoor space A, the opening-closing valve 31, the thermal storage block 11a, the thermal storage block 11c, the opening-closing valve 34, and the indoor space A in an order thereof. In the ventilation pathway 2, the indoor air is absolved from the indoor space A, the indoor air passes through the above mentioned pathway, then a part of heat stored in the thermal storage block 11a is moved to the thermal storage block 11c. In this way, the person above the thermal storage block 11c can utilize radiant heat of the thermal storage block 11c.

For example, there is a case where household apparatus such as an electrical apparatus, a cabinet and shelves are positioned on a flooring of the indoor space A. In this case, there might be a situation where the household apparatus become a shielding and a radiant heat is unable for even if heat stored in the thermal storage block 11 below the household apparatus is utilized efficiently as the radiant heat form the floor. In view of this, as above mentioned, the radiant heat of the thermal storage block 11 can be utilized effectively by the thermal storage block 11 which faces to the area where the person is receiving stored heat from another thermal storage block 11.

Also, in this case, the indoor temperature rises by the indoor air returning the indoor space A after recovering heat in the thermal storage block 11a. Therefore, the load of the air conditioner 9 heating the indoor space A can be reduced.

Further, by the thermal storage part 1 being blocked into the plurality of thermal storage blocks 11, it is possible to make a thermal capacity of each of the plurality of thermal storage block 11 smaller. Therefore, selecting a pathway through which the air passes through in the thermal storage block 11, accordingly, can improves heat storing speed, and an utilization speed of stored heat as well as allows heat transfer between the thermal storage blocks 11, thereby, utilization based on environment of an applied house (environment of the thermal storage part 1 is positioned or the like) can be expected.

Also, the control part 8 includes a function of determining a degree of deterioration of thermal storage performance of each thermal storage blocks 11 based on a temporal change in the temperature of each thermal storage block 11.

First, the control part 8 is configured to operate so that an indoor air of the indoor space A, which is controlled at a predetermined temperature by the air conditioner 9, is supplied to each of the thermal storage blocks 11a to 11d for a predetermined time (for example, three hours) so that heat is stored in the thermal storage blocks 11a to 11d, and records a temporal changes in the temperature of each of the thermal storage blocks 11a to 11d during the predetermined time. Then the control part 8 is configured to calculate incline of temporal changes in each thermal storage block temperature. The control part 8 is, for example, configured to calculate incline of rising of each thermal storage block temperature while the heat is stored in winter, and configured to calculate incline of falling of each thermal storage block temperature while the cold is stored in summer.

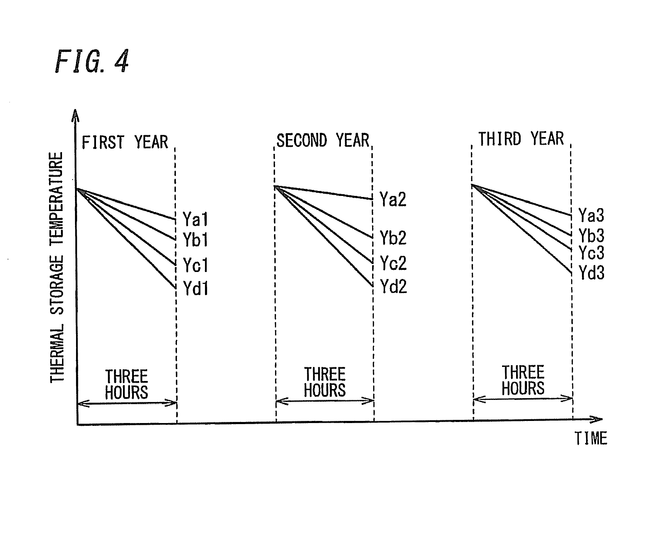

Specifically, each thermal storage block 11a to 11d is supplied with the indoor air of the indoor space A, which is controlled at predetermined temperature by the air conditioner 9, for three hours to store cold. FIG. 4 shows a temporal change in the temperature of each thermal storage block 11a to 11d during this time as thermal storage body temperature characteristics Ya1, Yb1, Yc1, Yd1, Ya2, Yb2, Yc2, Yd2, Ya3, Yb3, Yc3, and Yd3.

FIG. 4 shows thermal storage body temperature characteristics Ya1 to Yd1 of the system in a start of operation (first year) and record each incline of thermal storage body temperature characteristics Ya1 to Yd1 as a reference value (normal value) of the thermal storage blocks 11a to 11d.

FIG. 4 shows thermal storage body temperature characteristics Ya2 to Yd2 of the system in a second year. In the system at the second year, compared to the reference value (the thermal storage body temperature characteristic Ya1) an incline of the thermal storage body temperature characteristic Ya2 of the thermal storage block 11a is small, and a drop width of the thermal storage body temperature does not reaches to a predetermined value. Therefore, the control part 8 determines that a degree of deterioration of the thermal storage block 11a is large. The control part 8 is configured to display the result of the determination on a display part (not shown) of a monitoring device or the like, and report the user the result of the determination. Then, the user performs an operation such as changing the thermal storage block 11a to new one.

FIG. 4 shows thermal storage body temperature characteristics Ya3 to Yd3 of the system in a third year. In the system at the third year, compared to the reference value (the thermal storage body temperature characteristic Yc1), an incline of the thermal storage body temperature characteristic Yc3 of the thermal storage block 11c is small, and a drop width of the thermal storage body temperature does not reaches to a predetermined value. Therefore, the control part 8 determines that a degree of deterioration of the thermal storage block 11c is large. The control part 8 is configured to display the result of the determination on the display part (not shown) of the monitoring device or the like, and report the user the result of the determination. Then the user performs an operation to such as changing the thermal storage block 11c to new one.

Therefore, the degree of deterioration of the plurality of thermal storage blocks 11 can be determined regularly and individually and be reported to the user. Therefore, decline in thermal control efficiency due to the deterioration of the thermal storage block 11 can be suppressed.

Also, the plurality of thermal storage blocks 11 are arranged along the flooring surface H1 of the building H, but may be arranged along another constituent face such as a wall surface H4 or ceiling surface H3 of the building H. Note that, arranging the plurality of thermal storage blocks 11 along the flooring surface H1 might reduce effect from sunlight. Also, the plurality of thermal storage blocks 11 may be arranged in the structural surface such as the flooring surface H1, the wall surface H4, or the ceiling surface H3 of the building H.

As above described, the thermal storage control system according to the present embodiment includes: the plurality of thermal storage bodies (the plurality of thermal storage blocks 11), the ventilation pathway 2, the plurality of opening-closing members (the opening-closing valve 3, blower valves 13), the thermal storage body temperature detection parts 4, the indoor temperature detection part 5 and the control part 8. The plurality of thermal storage bodies, which each is provided with the ventilation holes (12) having openings on both ends, and are arranged along the structural surface of the indoor space A. The ventilation pathway 2 is formed to include the ventilation holes 12 of each of the plurality of thermal storage bodies, and includes the plurality of pathways which is from the first end 21 to the second end 22 so that air passes from the first end 21 to the second end 22. The plurality of opening-closing members is provided in the ventilation pathway 2 and configured to open or close the ventilation pathway 2. Thermal storage body temperature detection parts 4 are configured to detect temperature of the respective thermal storage bodies. The indoor temperature detection part 5 is configured to detect the temperature of the indoor air of the indoor space A. The control part 8 is configured to operate so that a pathway through witch air passes in the ventilation pathway 2 is formed from any one of the plurality of pathways by individually switch controlling the plurality of opening-closing members. The plurality of pathways of the ventilation pathway 2 differs from each other in a combination of one or more thermal storage bodies which constitute a pathway among the plurality of thermal storage bodies. The control part 8 is configured to switch the pathway through which the indoor air passes, in the ventilation pathway 2 among the plurality of pathways, by individually switch controlling the plurality of opening-closing members based on the temperature of each of the plurality of thermal storage bodies and the temperature of the indoor air.

As in the present embodiment, it is preferable that the thermal storage control system further includes the outdoor temperature detection part 6. The outdoor temperature detection part 6 is configured to detect the temperature of the outdoor air in the outdoor space B. The ventilation pathway 2 is configured to absorb the outdoor air through the first end 21. The control part 8 is configured to switch the pathway through which the outdoor air passes in the ventilation pathway 2 among the plurality of pathways by individually switch controlling opening and closing the plurality of opening-closing members based on the temperature of each of the plurality of thermal storage bodies and the temperature of the outdoor air.

As in the present embodiment, preferably, the thermal storage control system further includes the human detection part 7. The human detection part 7 is configured to detect the area where a person is in the indoor space A. The control part 8 is configured to individually switch control opening and closing of the plurality of opening-closing members so that the pathway including the ventilation holes 12 of the first thermal storage body among the plurality of pathways and the ventilation holes 12 of the second thermal storage body among the plurality of pathways is formed as the pathway through which the indoor air passes among the plurality of pathways based on the temperature of each of the plurality of thermal storage bodies, the temperature of the indoor space A, and a detection result of the human detection part 7. Among the plurality of the thermal storage bodies, the first thermal storage body is a thermal storage body facing to the area where the person is in the indoor space A. Among the plurality of thermal storage bodies, the second thermal storage body is a storage body exchanging heat with the first thermal storage body.

As in the present embodiment, preferably, the control part 8 is configured to determine the degree of deterioration of the thermal storage performance of each of the plurality of thermal storage bodies based on the temporal change in the temperature of each of the plurality of thermal storage bodies.

As in the present embodiment, preferably, the ventilation holes 12 have a round shaped cross section having the normal direction that is the direction D in which the air flows.

As in the present embodiment, preferably, the control part 8 is configured to conduct the following operation. The control part 8 is configured to switch the pathway so that the indoor air passes the through the at least one high thermal storage body having temperature higher than the target temperature of the air conditioner 9, which air-conditions the indoor space A, among the plurality of thermal storage bodies when the temperature of the indoor air is lower than the target temperature of the air conditioner 9 while the air conditioner 9 heats the indoor space A.

As in the present embodiment, preferably, the control part 8 is configured conduct the following operation. The control part 8 is configured to switch the pathways, in a case where the at least one high thermal storage body includes a plurality of high thermal storage bodies when the air conditioner 9 heats the indoor space A, so that the indoor air passes through the high thermal storage body which has the highest temperature among the plurality of high thermal storage bodies.

As in the present embodiment, preferably, the control part 8 is configured conduct the following operation. The control part 8 is configured to switch the pathway so that the indoor air passes through at least one low thermal storage body having temperature lower than the target temperature of the air conditioner 9, which air-conditions the indoor space A, among the plurality of thermal storage bodies when the indoor air temperature is higher than the target temperature of the air conditioner 9 while the air conditioner 9 cools the indoor space A.

As in the present embodiment, preferably, the control part 8 is configured to switch the pathway, in the case where the at least one low thermal storage bodies includes the plurality of low thermal storage bodies when the air conditioner 9 cools the indoor space A, so that the indoor air passes through the low thermal storage body which has the lowest temperature among the plurality of low thermal storage bodies.

As in present embodiment, preferably, the metal layer 17 is formed on the inner surface 16 of the ventilation holes 12.

The thermal storage body (the thermal storage block 11) according to the present embodiment is used as one of the plurality of thermal storage bodies of the thermal storage control system. The thermal storage body includes the ventilation holes 12 with openings on both ends, and the metal layer 17 is formed on each inner surface 16 of the ventilation holes 12.

### (Second embodiment)

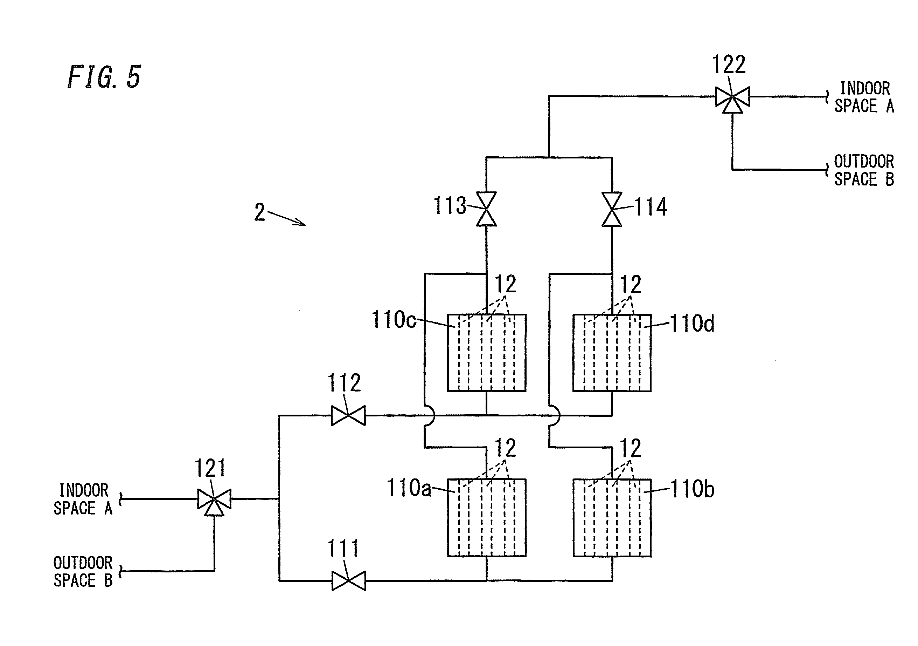

A thermal storage control system of the present embodiment has a ventilation pathway 2 including a structure shown in FIG. 5. Constituent elements similar to first embodiment are assigned with same reference numerical, and descriptions thereof will be omitted.

A plurality of thermal storage blocks 110a to 110d constituting the ventilation pathway 2 of the present embodiment are the thermal storage blocks 11 without the blower valves 13. Also, in FIG. 5, six opening-closing valves 111 to 114, 121, and 122 are connected to the four thermal storage blocks 110a to 110d which are arranged in two rows by two columns. Note that, the opening-closing valves 111 to 114 are formed with two-way valve, and the opening-closing valves 121 and 122 are formed with a three-way valve.

An outlet of the opening-closing valve 111 is connected to inflow openings of ventilation holes 12 of each of the thermal storage blocks 110a and 110b, and an outlet of the opening-closing valve 112 is connected to inflow openings of ventilation holes 12 of each of the thermal storage blocks 110a and 110b. Also, an inlet of the opening-closing valve 113 is connected to outflow openings of each ventilation holes 12 of each of the thermal storage blocks 110c and 110d, and an inlet of the opening-closing valve 114 is connected to outflow openings of each ventilation holes 12 of the thermal storage blocks 110b and 110d.

Further, each inlet of the opening-closing valves 111 and 112 communicates with an indoor space A or an outdoor space B in switchable manner through the opening-closing valve 121, and each outlet of the opening-closing valve 113 and 114 communicates with the indoor space A or the outdoor space B in switchable manner through the opening-closing valve 122.

Note that, the opening-closing valve 121 is a three-way valve including two inlets (a first inlet and a second inlet) and one outlet, and permits connection of the first inlet or the second inlet to the outlet by a switching action. Also, the opening-closing valve 122 is a three-way valve including one inlet and two outlets (a first outlet and a second outlet), and permits connection of the inlet to the first outlet or the second outlet by a switching action. Further, the opening-closing valve 121 can perform a blocking action of permitting a connection of neither the first inlet nor the second inlet to the outlet by the switching action. Also, the opening-closing valve 122 can perform a blocking action permitting connection of neither the first outlet nor the second outlet to the inlet by the switching action.

Furthermore, a control part 8 is configured to individually control the switch actions of the opening-closing valves 111 to 114, 121 and 122 based on each temperature of the thermal storage blocks 110a to 110d, indoor temperature, outdoor temperature, and indoor target temperature information. Then, a pathway through which the air passes in the ventilation pathway 2 is switched by the switch actions of the opening-closing valves 111 to 114, 121 and 122, and then heat is stored to any chosen thermal storage block among the thermal storage blocks 110a to 110d, or a stored heat of any chosen thermal storage block is utilized.

First, heat storage to the thermal storage blocks 110a to 110d is described.

The control part 8 is configured to permit a heat storage process when temperature of at least one of the thermal storage blocks 110a to 110d is lower than the outdoor temperature during a daytime in winter or the like. Then, the control part 8 is configured to target the at least one thermal storage block, in which a thermal storage temperature is lower than the outdoor temperature, among the thermal storage blocks 110a to 110d, to compare the thermal storage temperature with a predetermined target heat storage temperature.

Then, the control part 8 is configured to operate so that heat is first stored to a thermal storage block having the highest temperature among the at least one thermal storage block having current thermal storage body temperature lower than the target heat storage temperature.

For example, it is assumed that each temperature of the thermal storage blocks 110a to 110d is lower than the target heat storage temperature, and the temperature of the thermal storage block 110a is the highest. In this case, the control part 8 is configured to open sides of the outdoor space B of the opening-closing valves 121 and 122, open the opening-closing valves 111 and 113, and close the opining-closing valves 112 and 114. In this case, a pathway is formed in the ventilation pathway 2 so that an outdoor air passes through the outdoor space B, the opening-closing valve 121, the opening-closing valve 111, the thermal storage block 110a, the opening-closing valve 113, the opening-closing valve 122, and the outdoor space B in an order thereof. In the ventilation pathway 2, the outdoor air is absolved from the outdoor space B, the outdoor air passes through above-mentioned pathway, and then heat is stored in the thermal storage block 110a.

When the temperature of the thermal storage block 110a has rose to the target heat storage temperature, the control part 8 is configured to operate so that heat is stored to the thermal storage block 110c which has the highest temperature among the thermal storage blocks 110b to 110d. The control part 8 is configured to open the sides of the outdoor space B of the opening-closing valves 121 and 122, open the opening-closing valves 112 and 113, and close the opening-closing valves 111 and 114. In this case, the pathway is formed in the ventilation pathway 2 so that the outdoor air passes through the outdoor space B, the opening-closing valve 121, the opening-closing valve 112, the thermal storage block 110c, the opening-closing valve 113, the opening-closing valve 122, and the outdoor space B in an order thereof. In the ventilation pathway 2, the outdoor air is absolved from the outdoor space B, the outdoor air passes through the above-mentioned pathway, and then heat is stored in the thermal storage block 110c.

When the temperature of the thermal storage block 110c has rose to the target heat storage temperature, hereinafter, the control part 8 is configured operate so that heat is stored to, in an order, the thermal storage block which has the highest temperature among the other thermal storage blocks having current temperature lower than the target heat storage temperature.

Further, in a case where the indoor temperature is low during a nighttime in winter or the like, a load of the air conditioner 9 heating the indoor space A can be reduced by utilizing the thermal storage blocks which stores heat as mentioned above.

It is assumed that the air conditioner 9 heating the indoor space A and the target indoor temperature set on the air conditioner 9 is 20°C. If the indoor temperature is lower than 20°C, the control part 8 is configured to select any one of thermal storage blocks having temperature equal to or higher than 20°C (for example, the thermal storage block with the highest temperature), and utilize stored heat of this selected thermal storage block.

For example, in a case where stored heat of the thermal storage block 110a is utilized, the control part 8 is configured to open sides of the indoor space A of the opening-closing valves 121 and 122, open the opening-closing valves 111 and 113, and close the opening-closing valves 112 and 114. In this case, a pathway is formed in the ventilation pathway 2 so that the indoor air passes through the indoor space A, the opening-closing valve 121, the opening-closing valve 111, the thermal storage block 110a, the opening-closing valve 113, the opening-closing valve 122, and the indoor space A in an order thereof. In the ventilation pathway 2, the indoor air is absolved from the indoor space A, the indoor air of the indoor space A is passes through the ventilation holes 12 of the thermal storage block 110a, and then, this indoor air is returned to the indoor space A. Therefore, indoor temperature of the indoor space A increases by the indoor air passing through the ventilation pathway 2 recovering stored heat of the thermal storage block 110a. Therefore, the load of the air conditioner 9 heating the indoor space A can be reduced.

If the indoor temperature is still lower than the 20°C at the point where the temperature of the thermal storage block 110a has dropped to lower than 20°C, the control part 8 is configured to sequentially selects any one of other thermal storage blocks having thermal storage body temperature equal to or higher than 20°C and utilizes stored heat of this selected thermal storage block similarly.

Also, the control part 8 is configured to permit a cold storage process when temperature of at least one of the thermal storage blocks 110a to 110d is higher than the outdoor temperature during a nighttime in summer or the like. Then, the control part 8 is configured to targets the at least one thermal storage block which has the thermal storage temperature higher than the outdoor temperature, among the thermal storage block 110a to 110d, to compare the each of the thermal storage temperature with target cold storage temperature.

Then, the control part 8 is configured to operate so that cold is first stored to the thermal storage block having the lowest temperature among the at least one thermal storage blocks having current thermal storage body temperature higher than the target cold storage temperature.

For example, it is assumed that the temperature of each of the thermal storage blocks 110a to 110d is higher than the target cold storage temperature, and a temperature of the thermal storage block 110a is the lowest. The control part 8 is configured to open the sides of the outdoor space B of the opening-closing valves 111 and 113, open the opening-closing valves 112 and 114, and close the opening-closing valves 112 and 114. In this case, a pathway is formed in the ventilation pathway 2 so that the outdoor air passes through the outdoor space B, the opening-closing valve 121, the opening-closing valve 111, the thermal storage block 110a, the opening-closing valve 113, opening-closing valve 122, and the outdoor space B in an order thereof. In the ventilation pathway 2, the outdoor air is absolved from the outdoor space B, the outdoor air passes through above-mentioned pathway, and cold is stored in the thermal storage block 110a.

When the temperature of the thermal storage block 110a has dropped to the target cold storage temperature, the control part 8 is configured to operate so that cold is stored to the thermal storage block 110c which has the lowest temperature among the thermal storage blocks 110b to 110d. The control part 8 is configured to open the sides of the outdoor spaces B of the opening-closing valves 121 and 122, open the opening-closing valves 112 and 113, and close the opening-closing valves 111 and 114. In this case, a pathway is formed in the ventilation pathway 2 so that the outdoor air passes through the outdoor space B, the opening-closing valve 121, the opening-closing valve 112, the thermal storage block 110c, the opening-closing valve 113, the opening-closing valve 122, and the outdoor space B in an order thereof. In the ventilation pathway 2, the outdoor air is absolved from the outdoor space B, the outdoor air passes through the above-mentioned pathway, and cold is stored in the thermal storage block 110c.

When the temperature of the thermal storage block 110c has dropped to the target cold storage temperature, hereinafter, the control part 8 is configured to operate so that cold is stored to in an order the thermal storage block which has the lowest temperature among the thermal storage blocks having current temperature higher than the target cold storage temperature.

In a case where the indoor temperature is high during a daytime in summer or the like, a load of the air conditioner 9 cooling the indoor space A can be reduced by utilizing the thermal storage blocks which stores cold as mentioned above.

It is assumed that, during a daytime in summer, the air conditioner 9 cools the indoor space A and the target indoor temperature set to the air conditioner 9 is 28°C. If the indoor temperature is higher than 28°C, the control part 8 is configured to select any one of the thermal storage blocks having temperature equal to or lower than 28°C (for example, the thermal storage block with the lowest temperature), and utilize stored cold of this selected thermal storage block.

For example, in a case where stored cold of the thermal storage block 110a is utilized, the control part 8 is configured to open the sides of the indoor space A of the opening-closing valves 121 and 122, open the opening-closing valve 111 and 113, and close the opening-closing valves 112 and 114. In this case, a pathway is formed in the ventilation pathway 2 so that the indoor air passes through the indoor space A, the opening-closing valve 121, the opening-closing valve 111, the thermal storage block 110a, the opening-closing valve 113, the opening-closing valve 122, and the indoor space A in an order thereof. In the ventilation pathway 2, the indoor air is absolved from the indoor space A, the indoor air of the indoor space A is passes through the ventilation holes 12 of the thermal storage block 110a, and then, this indoor air is returned to the indoor space A. The indoor temperature of the indoor space A drops by the indoor air passing through the ventilation pathway 2 recovering stored cold of the thermal storage block 110a. Therefore, the load of the air conditioner 9 cooling the indoor space A can be reduced.

If the indoor temperature is still higher than 28°C at the point when the temperature of the thermal storage block 110a has rose to higher than 28°C, the control part 8 is configured to sequentially selects any one of other thermal storage blocks in which thermal storage body temperature is equal to or lower than 28°C, and stored cold of this selected thermal storage block is utilized similarly.

As above mentioned, heat can be stored effectively using the plurality of thermal storage blocks, by the control part 8 appropriately selecting the pathway of the ventilation pathway 2 in which stores heat (including cold) to the thermal storage block based on the outdoor temperature and the thermal storage body temperature.

Also, the indoor space A can be thermal controlled effectively using the thermal storage blocks 110a to 110d, by the control part 8 appropriately selecting the pathway of the ventilation pathway 2 including the thermal storage block in which stored heat (including cold) is utilized, based on the outdoor temperature and the thermal storage body temperature.

Although the present invention has been described with reference to certain preferred embodiments, numerous modifications and variations can be made by those skilled in the art without departing from the true spirit and scope of this invention, namely claims.

## Claims

1. A thermal storage control system, comprising:
a plurality of thermal storage bodies, which each has a ventilation hole with openings on both ends, provided along a construction surface of an indoor space;
a ventilation pathway including the ventilation hole of each of the plurality of thermal storage bodies, and having a plurality of pathways from a first end to a second end so that air passes from the first end to the second end;
a plurality of opening-closing members provided on the ventilation pathway, and configured to open or close the ventilation pathway;
thermal storage body temperature detection parts configured to detect temperature of each of the plurality of thermal storage bodies;
an indoor temperature detection part configured to detect temperature of indoor air in the indoor space; and
a control part configured to determine a pathway through which the air passes in the ventilation pathway from the plurality of pathways by individually controlling opening and closing of the plurality of opening-closing members,
wherein the plurality of pathways of the ventilation pathway differs from each other in a combination of one or more thermal storage bodies which constitutes a pathways among the plurality of thermal storage bodies, and
wherein the control part is configured to switch the pathway through which the indoor air passes of the ventilation pathway among the plurality of pathways by individually controlling opening and closing of the plurality of opening-closing members based on the temperature of each of the plurality of thermal storage bodies and the temperature of the indoor air.

2. The thermal storage control system of claim 1, further comprising an outdoor temperature detection part configured to detect temperature of outdoor air in an outdoor space,
wherein the ventilation pathway absorbs the outdoor air through the first end, and
wherein the control part is configured to switch a pathway through which the outdoor air passes, among the plurality of pathways, of the ventilation pathway by individually controlling opening and closing of the plurality of opening-closing members based on the temperature of each of the plurality of thermal storage bodies and the temperature of the outdoor air.

3. The thermal storage control system of claim 1 or 2, further comprising a human detection part configured to detect an area where a person is in the indoor space,
wherein the control part is configured to individually control opening and closing of the plurality of opening-closing members so that a pathway including the ventilation hole of a first thermal storage body among the plurality of pathways and the ventilation hole of a second thermal storage body among the plurality of pathways is formed as a pathway through which the indoor air passes among the plurality of pathways, based on the temperature of each of the plurality of thermal storage bodies, the temperature of the indoor space, and detection result of the human detection part, the first thermal storage body facing to the area where the person is in the indoor space, the second thermal storage body exchanging heat with the first thermal storage body.

4. The thermal storage control system of any one of claims 1 to 3, wherein the control part is configured to determine a degree of deterioration of thermal storage performance of each of the plurality of thermal storage bodies based on a temporal change in the temperature of each of the plurality of thermal storage bodies.

5. The thermal storage control system of any one of claims 1 to 4, wherein the ventilation hole has a round shaped cross section having a normal direction that is a direction in which the air passes.

6. The thermal storage control system of claim 1, wherein the control part is configured to switch the pathway so that the indoor air passes through at least one high thermal storage body having temperature is higher than a target temperature of an air conditioner, which air-conditions the indoor space, among the plurality of thermal storage bodies when the temperature of indoor air is lower than the target temperature of the air conditioner while the air conditioner heating the indoor space.

7. The thermal storage control system of claim 6, wherein the control part is configured to switch the pathways, in a case where the at least one high thermal storage body comprises a plurality of high thermal storage bodies when the air conditioner heats the indoor space, so that the indoor air passes through a high thermal storage body which has a highest temperature among the plurality of high thermal storage bodies.

8. The thermal storage control system of claim 1, wherein the control part is configured to switch the pathway so that the indoor air passes through at least one low thermal storage body having temperature lower than a target temperature of an air conditioner, which air-conditions the indoor space, among the plurality of thermal storage bodies when the temperature of the indoor air is higher than the target temperature of the air conditioner while the air conditioner cooling the indoor space.

9. The thermal storage control system of claim 8, wherein the control part is configured to switch the pathways, in a case where the at least one low thermal storage body comprises a plurality of low thermal storage bodies when the air conditioner cools the indoor space, so that the indoor air passes through a low thermal storage body which has a lowest temperature among the plurality of low thermal storage bodies.

10. The thermal storage control system of any one of claims 1 to 9, wherein a metal layer is formed on an inner surface of the ventilation hole.

11. A thermal storage body which is used as one of the plurality of thermal storage bodies of the thermal storage control system of any one of claims 1 to 9, the thermal storage body comprising a ventilation hole with openings on both ends, and a metal layer being formed on an inner surface of the ventilation hole.

## Amended claims

### Amended claims under Art. 19.1 PCT

**1.** (Amended) A thermal storage control system, comprising:
a plurality of thermal storage bodies, which each has a ventilation hole with openings on both ends, provided along a construction surface of an indoor space;
a ventilation pathway including the ventilation hole of each of the plurality of thermal storage bodies, and having a plurality of pathways from a first end to a second end so that air passes from the first end to the second end;
a plurality of opening-closing members provided on the ventilation pathway, and configured to open or close the ventilation pathway;
thermal storage body temperature detection parts configured to detect temperature of each of the plurality of thermal storage bodies;
an indoor temperature detection part configured to detect temperature of indoor air in the indoor space; and
a control part configured to determine a pathway through which the air passes in the ventilation pathway from the plurality of pathways by individually controlling opening and closing of the plurality of opening-closing members,
wherein the plurality of pathways of the ventilation pathway differs from each other in a combination of one or more thermal storage bodies which constitutes a pathways among the plurality of thermal storage bodies,
wherein the control part is configured to switch the pathway through which the indoor air passes of the ventilation pathway among the plurality of pathways by individually controlling opening and closing of the plurality of opening-closing members based on the temperature of each of the plurality of thermal storage bodies and the temperature of the indoor air, and
wherein the plurality of opening-closing members comprises:
a plurality of blower valves provided on both ends of the ventilation hole of each of the plurality of thermal storage bodies; and
a plurality of opening-closing valves provided on the ventilation pathway.

**2.** The thermal storage control system of claim 1, further comprising an outdoor temperature detection part configured to detect temperature of outdoor air in an outdoor space,
wherein the ventilation pathway absorbs the outdoor air through the first end, and
wherein the control part is configured to switch a pathway through which the outdoor air passes, among the plurality of pathways, of the ventilation pathway by individually controlling opening and closing of the plurality of opening-closing members based on the temperature of each of the plurality of thermal storage bodies and the temperature of the outdoor air.

**3.** The thermal storage control system of claim 1 or 2, further comprising a human detection part configured to detect an area where a person is in the indoor space,
wherein the control part is configured to individually control opening and closing of the plurality of opening-closing members so that a pathway including the ventilation hole of a first thermal storage body among the plurality of pathways and the ventilation hole of a second thermal storage body among the plurality of pathways is formed as a pathway through which the indoor air passes among the plurality of pathways, based on the temperature of each of the plurality of thermal storage bodies, the temperature of the indoor space, and detection result of the human detection part, the first thermal storage body facing to the area where the person is in the indoor space, the second thermal storage body exchanging heat with the first thermal storage body.

**4.** The thermal storage control system of any one of claims 1 to 3, wherein the control part is configured to determine a degree of deterioration of thermal storage performance of each of the plurality of thermal storage bodies based on a temporal change in the temperature of each of the plurality of thermal storage bodies.

**5.** The thermal storage control system of any one of claims 1 to 4, wherein the ventilation hole has a round shaped cross section having a normal direction that is a direction in which the air passes.

**6.** The thermal storage control system of claim 1, wherein the control part is configured to switch the pathway so that the indoor air passes through at least one high thermal storage body having temperature is higher than a target temperature of an air conditioner, which air-conditions the indoor space, among the plurality of thermal storage bodies when the temperature of indoor air is lower than the target temperature of the air conditioner while the air conditioner heating the indoor space.

**7.** The thermal storage control system of claim 6, wherein the control part is configured to switch the pathways, in a case where the at least one high thermal storage body comprises a plurality of high thermal storage bodies when the air conditioner heats the indoor space, so that the indoor air passes through a high thermal storage body which has a highest temperature among the plurality of high thermal storage bodies.

**8.** The thermal storage control system of claim 1, wherein the control part is configured to switch the pathway so that the indoor air passes through at least one low thermal storage body having temperature lower than a target temperature of an air conditioner, which air-conditions the indoor space, among the plurality of thermal storage bodies when the temperature of the indoor air is higher than the target temperature of the air conditioner while the air conditioner cooling the indoor space.

**9.** The thermal storage control system of claim 8, wherein the control part is configured to switch the pathways, in a case where the at least one low thermal storage body comprises a plurality of low thermal storage bodies when the air conditioner cools the indoor space, so that the indoor air passes through a low thermal storage body which has a lowest temperature among the plurality of low thermal storage bodies.

**10.** The thermal storage control system of any one of claims 1 to 9, wherein a metal layer is formed on an inner surface of the ventilation hole.

**11.** A thermal storage body which is used as one of the plurality of thermal storage bodies of the thermal storage control system of any one of claims 1 to 9, the thermal storage body comprising a ventilation hole with openings on both ends, and a metal layer being formed on an inner surface of the ventilation hole.
